(19) Europäisches Patentamt
European Patent Office
Office européen des brevets

(11) **EP 3 006 108 A1**

(12) **EUROPEAN PATENT APPLICATION**

(43) Date of publication:
**13.04.2016 Bulletin 2016/15**

(51) Int Cl.:
*B01J 37/08* [(2006.01)]  *B01J 20/08* [(2006.01)]
*B01J 21/04* [(2006.01)]  *B01J 21/10* [(2006.01)]
*B01D 53/86* [(2006.01)]  *B01J 23/78* [(2006.01)]

(21) Application number: **14382387.0**

(22) Date of filing: **10.10.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Repsol, S.A.**
**28045 Madrid (ES)**

(72) Inventors:
• **Riesco García, José Manuel**
  **28935 Móstoles (ES)**

• **Penelas Pérez, Germán**
  **28935 Móstoles (ES)**
• **Urakawa, Atsushi**
  **Fukuoka 816-0813 (JP)**
• **Bobadilla Baladrón, Luis Francisco**
  **41089 Montequinto (ES)**

(74) Representative: **ZBM Patents - Zea, Barlocci &**
**Markvardsen**
**Plaza Catalunya, 1**
**08002 Barcelona (ES)**

(54) **Multimetallic supported compound obtainable from a layered double hydroxide hydrotalcite-type**

(57) The present invention comprises a multimetallic supported compound which comprises a multimetallic system supported on a calcined mixed-oxide obtainable from a layered double hydroxide hydrotalcite-type, wherein: the multimetallic supported compound has an amount of M(I) comprised from 2 to 50% by weight of the weight of the calcined metal supported on the mixed-oxide obtained from hydrotalcite-type or an amount of M(II)' comprised from 5 to 50% by weight of the calcined metal supported on the mixed-oxide obtained from hydrotalcite-type; or an amount of M(I) and M(II)' comprised from 2 to 50% by weight of the calcined metal supported on the mixed-oxide obtained from hydrotalcite-type; and the calcined mixed-oxide obtained from hydrotalcite-type has an amount of M(II) comprised from 4 to 50 % by weight of the weight of the calcined mixed-oxide obtained from hydrotalcite-type. A process for capturing and reducing carbon dioxide comprising: Contacting a multimetallic supported compound as defined above with a gas stream containing carbon dioxide to obtain the multimetallic supported compound having the carbon dioxide adsorbed; and (b) Contacting the multimetallic supported compound obtained in step (a), with a reducing agent selected from the group consisting of $H_2$, an hydrogen source, and mixture thereof.

EP 3 006 108 A1

**Description**

The present invention relates to the field of multimetallic supported compounds which comprises a multimetallic system supported on a calcined mixed-oxide obtained from a layered double hydrotalcite-type. Particularly, it relates to a process of adsorbing and reducing carbon dioxide using the multimetallic supported compound.

BACKGROUND ART

The fast development of social and economic modernization involves massive emissions of $CO_2$. The global carbon dioxide emission has grown enormously in the past 50 years. In 1950 the global emissions was about 1000 million tons carbon equivalent, but in accordance with the forecast performed by the International Energy Agency (IEA), in case business as usual scenario is maintained; global $CO_2$ emissions would pass from 34 Gtpa in 2012 to 44 Gtpa in 2025.

In last 5th report published by the United Nation's Inter-Governmental Panel on Climate Change (IPPC) it has also been recognized that human-emitted greenhouse gases (including carbon dioxide) are extremely likely responsible for more than half of Earth's temperature increase since 1951, having a deep impact on climate change.

On the other hand, continued growth of the world population, has led to a strong increase on fossil based fuels, raising the level of carbon dioxide in the atmosphere, recently reaching 400 ppmv.

Due to both effects mentioned above, there is a growing concern regarding the need for reducing $CO_2$ emissions and developing catalyst systems and process that utilize alternative low carbon energy sources, such as renewable energy sources, together with $CO_2$ as an abundant and low cost raw material, rather than a waste, producing valuable fuel intermediated products like syngas. $CO_2$ based syngas or synthesis gas later on can be transformed to low carbon fuels, substituting the currently used crude oil based fuels.

Nowadays syngas is produced by steam reforming of natural gas, coal gasification, or other waste-to-energy process characterized by high specific $CO_2$ emissions. It is therefore an important challenge to develop low $CO_2$ emissions technologies that can substitute existing technologies, and/or to develop processes that allows recycling carbon dioxide to a valuable product,

Several technologies have been proposed for the reduction of $CO_2$ emissions. One of those technologies involves the capture of carbon dioxide and its storage (CCS). CCS has been proposed as one of the short-term goals for $CO_2$ mitigation.

However, the considerable cost of the $CO_2$ capture step, together with the need of a suitable storage site around the $CO_2$ source and public perception issues have slowed the deployment of this technology.

Related to CCS field, development of solid sorbents which allows the selective $CO_2$ capture in gas streams has attracted much attention. The $CO_2$ adsorption and regeneration of some metal-based sorbents, such as $K_2CO_3$/activated carbon, $K_2CO_3/TiO_2$, $K_2CO_3/MgO$, $K_2CO_3/ZrO_2$, $K_2CO_3/Al_2O_3$, and $MgO/Al_2O_3$-hydrotalcite type- modified $K_2CO_3$ have been studied.

Particularly, $MgO/Al_2O_3$-hydrotalcite type-modified $K_2CO_3$ have been also disclosed for the capture of $CO_2$ in gas stream.

However, it is known that the catalytic activity of the hydrotalcite-type compounds can be modified or even compromise by a huge number of parameters. Some of these parameters include the amount, the weight ratio, or the molar ratio of the metals added to the hydrotalcite type compound; the morphology of the hydrotalcite, for instance specific surface area, particle size and/or pore size; and the process used for their preparation, for instance, the method for incorporing the metals, as well as the experimental conditions.

Although some hydrotalcites-type compounds having a high $CO_2$ capture capacity have been disclosed, none of those compounds is capable of doing the capture and reduction in a selective way and maintaining the efficiency of the process.

Therefore, from what is known in the art, it is derived that there is still the need to provide a hydrotalcite-type compound capable of being used as catalyst in a process for capturing and reduction of carbon dioxide having a high global yield to CO formation and maintaining a high efficient $CO_2$ conversion.

SUMMARY OF THE INVENTION

Inventors have found that the multimetallic supported compound which comprises a multimetallic system supported on a calcined mixed-oxide obtainable from a layered double hydroxide hydrotalcite-type, having the specific composition of metals as defined in the present invention is useful as catalyst for capturing and selectively reducing carbon dioxide into carbon monoxide maintaining both a high global yield to CO formation and a high efficient $CO_2$ conversion. The multimetallic supported compound of the invention comprises inexpensive and abundant metals, providing such an appropriate thermal stability and a specific surface to the multimetallic supported compound such that improves both its capacity of capturing of carbon dioxide and its capacity to selectively reducing carbon dioxide to carbon monoxide.

The use of the multimetallic supported compound of the invention is also advantageous because allows carrying out the carbon dioxide selectively capture from a diluted stream and its conversion to carbon monoxide in a one-pot process without the need of additional carbon dioxide containing stream purifying steps and/or concentrating steps. Further, their use also allows increasing the reduction velocity; and the regeneration of the multimetallic supported compound after the reduction stage, maintaining the carbon dioxide capture capacity, thus making it a self-regenerating system.

Therefore, the use of the multimetallic supported compound of the invention as a catalyst, based on earth abundant materials in the process of reducing carbon dioxide to carbon monoxide allows having a process for reducing emissions of carbon dioxide to the atmosphere being environmentally friendly and using carbon dioxide as a raw material rather than a waste, obtaining valuable products.

Thus, an aspect of the present invention relates to a multimetallic supported compound which comprises a multimetallic system supported on a calcined mixed-oxide obtainable from a layered double hydroxide hydrotalcite-type, wherein: the calcined mixed-oxide obtainable from a hydrotalcite-type comprises: a $M^{2+}$ divalent metal cation M(II) selected from the group consisting of $Mg^{2+}$, $Zn^{2+}$, $Ni^{2+}$, $Co^{2+}$, and $Fe^{+2}$; and a $M^{3+}$ trivalent metal cation M(III) selected from the group consisting of $Al^{3+}$, $Fe^{3+}$, $Ga^{3+}$, $Co^{3+}$, $Mn^{3+}$, and $Cr^{3+}$; the multimetallic system comprises: an alkaline-metal cation selected from the group consisting of a $M^{1+}$ alkaline-metal cation M(I) which is $K^{1+}$; a $M^{2+}$ alkaline-earth metal cation M(II)' which is $Ba^{2+}$; and combination thereof; a $M^{2+}$ divalent metal cation M(II)" which is $Cu^{2+}$; optionally one or more of $M^{2+}$ divalent metal cations M(II)''' selected from the group consisting of $Zn^{2+}$, $Fe^{+2}$, $Pt^{2+}$, $Pd^{2+}$, $Mn^{2+}$, $Ni^{2+}$, $Co^{2+}$, $Au^{+2}$, and $Sn^{2+}$; and optionally one or more of $M^{3+}$ trivalent metal cations M(III)' selected from the group consisting of $Fe^{3+}$, and $Cr^{3+}$; the multimetallic supported compound is obtainable by a process comprising: (a) calcinating a layered double hydroxide hydrotalcite-type comprising a mixture of M(II) cation, M(III) cation, and a n-valent anion selected from the group consisting of $NO_3^-$, $SO_4^-$, $CO_3^{2-}$, $CH_3CO_2^-$, $Cl^-$, $Br^-$, and $F^-$, at a temperature comprised from 300°C to 800°C for a period of time comprised from 2 to 10h to obtain the calcined mixed-oxide obtainable from a hydrotalcite-type having a weight ratio of $M(II)O:M(III)_2O_3$ comprised from 4:96 to 50:50; (b) impregnating the calcined mixed-oxide obtainable from a hydrotalcite-type of step (a) with a metal precursor of the M(II)"$Cu^2$; followed by drying the paste thus obtained at a temperature comprised from 60 to 150°C; and calcinating the paste at a temperature comprised from 300 to 800°C for a period of time comprised from 2 to 10 hours to obtain a calcined metal supported on the mixed-oxide obtained from hydrotalcite-type; and (c) impregnating the calcined metal supported on the mixed-oxide obtained from hydrotalcite-type of step (b) with the alkaline-metal precursor of the M(I) $K^{1+}$; or the M(II)' $Ba^{2+}$; or combination thereof; followed by drying the paste thus obtained at a temperature comprised from 60 to 150°C; and calcinating the paste at a temperature comprised from 300 to 800°C for a period of time comprised from 2 to 10 hours, obtaining the multimetallic supported compound; wherein: the multimetallic supported compound has an amount of M(I) comprised from 2 to 50% by weight of the weight of the calcined metal supported on the mixed-oxide obtained from hydrotalcite-type of step (b) or an amount of M(II)' comprised from 5 to 50% by weight of the calcined metal supported on the mixed-oxide obtained from hydrotalcite-type of step (b); or an amount of M(I) and M(II)' comprised from 2 to 50% by weight of the calcined metal supported on the mixed-oxide obtained from hydrotalcite-type of step (b); and the calcined mixed-oxide obtained from hydrotalcite-type has an amount of M(II) comprised from 4 to 50 % by weight of the weight of the calcined mixed-oxide obtained from hydrotalcite-type in form of M(II)O; with the proviso that: wherein when the multimetallic system comprises a combination of a $M^{1+}$ alkaline-metal cation M(I) which is $K^{1+}$ and a $M^{2+}$ alkaline-earth metal cation M(II)' which is $Ba^{2+}$, then step (c) of the process comprises: impregnating the calcined metal supported on the mixed-oxide obtained from a hydrotalcite-type of step (b) with a mixture of the alkaline-metal precursor of M(I) $K^{1+}$ and an alkaline-earth metal precursor of M(II)' $Ba^{2+}$; wherein when the multimetallic system comprises one or more of $M^{2+}$ divalent metal cations M(II)''', or one or more of $M^{3+}$ trivalent metal cations M(III)', then step (b) of the process comprises impregnating the calcined mixed-oxide obtainable from a hydrotalcite-type of step (a) with a mixture of the metal precursor of the M(II)"$Cu^{2+}$ and one or more of the precursors of the $M^{2+}$ divalent metal cations M(II)''' or one or more of the metal precursors of the $M^{3+}$ trivalent metal cation M(III)'; and wherein when the multimetallic system comprises one or more of $M^{2+}$ divalent metal cations M(II)''' and one or more of $M^{3+}$ trivalent metal cations M(III)', then step (b) of the process comprises impregnating the calcined mixed-oxide obtainable from a hydrotalcite-type of step (a) with a mixture of the metal precursor of the M(II)"$Cu^{2+}$ and one or more of the precursors of the $M^{2+}$ divalent metal cation M(II)''' and one or more of the metal precursors of the $M^{3+}$ trivalent metal cation M(III)'.

Another aspect of the invention relates to a one-pot process for capturing and reducing carbon dioxide comprising: Contacting a multimetallic supported compound as defined in the first aspect of the invention with a gas stream containing carbon dioxide to obtain the multimetallic supported compound having the carbon dioxide adsorbed; and Contacting the multimetallic supported compound obtained in step (a), with a reducing agent selected from the group consisting of $H_2$, an hydrogen source, and mixture thereof; wherein: the temperature of steps (a) and (b) is comprised from 300 to 750°C; and the pressure of steps (a) and (b) is comprised from 1 to 80 bar.

BRIEF DESCRIPTION OF THE DRAWINGS

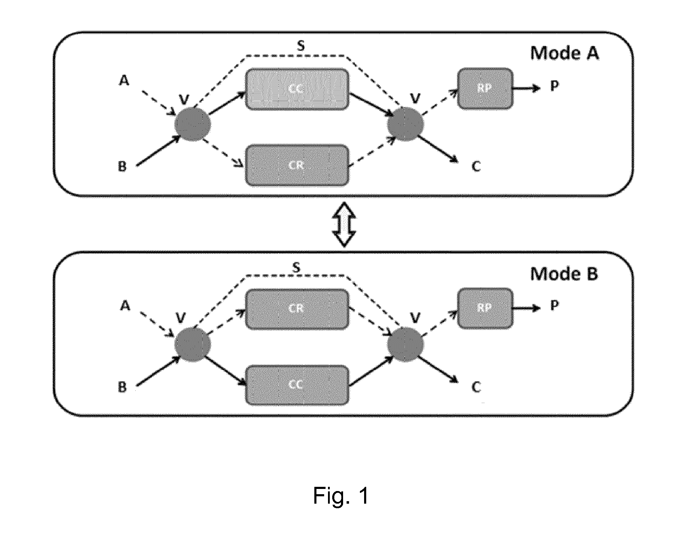

FIG. 1 is a block diagram which represents an embodiment of the one-pot process where two CCR (Carbon Capture and Reduction) reactors are employed and at some point of time (Mode A) one of them is working for carbon dioxide capture (CC) and the other for carbon dioxide reduction (CR). By simultaneously switching the two 4-way valves, one can switch the function of the two reactors (Mode B). The abbreviations represents as follows: CC represents the capture step (a); CR represents the reduction step (b); and RP represents reduction products; solid-arrow represents $CO_2$ capture flow path; dashed-arrow represents $CO_2$ reduction flow path; V represents a 4-way valve; A represents the $H_2/NH_3$ stream; B represents the $CO_2$-containing stream; S represents synchronization; P represents the products; and C represents the clean ($CO_2$/product free) effluent.

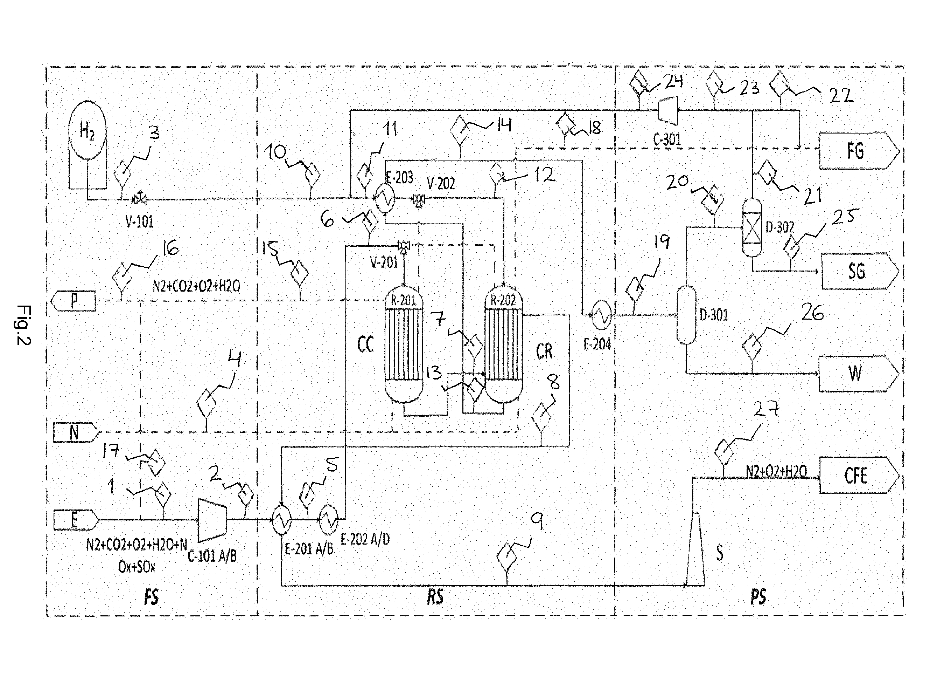

FIG. 2 is a Process Flow Diagram which represents an embodiment of the invention with the steps of the process of the one-pot process of capturing and reduction of carbon dioxide working in a parallel multitubular system. The abbreviations represents as follows: FS represents feed section; RS represents reaction section; PS represents purification section; CC represents the capture step; CR represents the reduction step ; P represents the purge; N represents $N_2$ stream for inertization; E represents emissions; S represents stack; FG represents fuel gas; SG represents syngas to MeOH or FT; W represents water for $H_2$ generation; and CFE represents $CO_2$ free emissions.

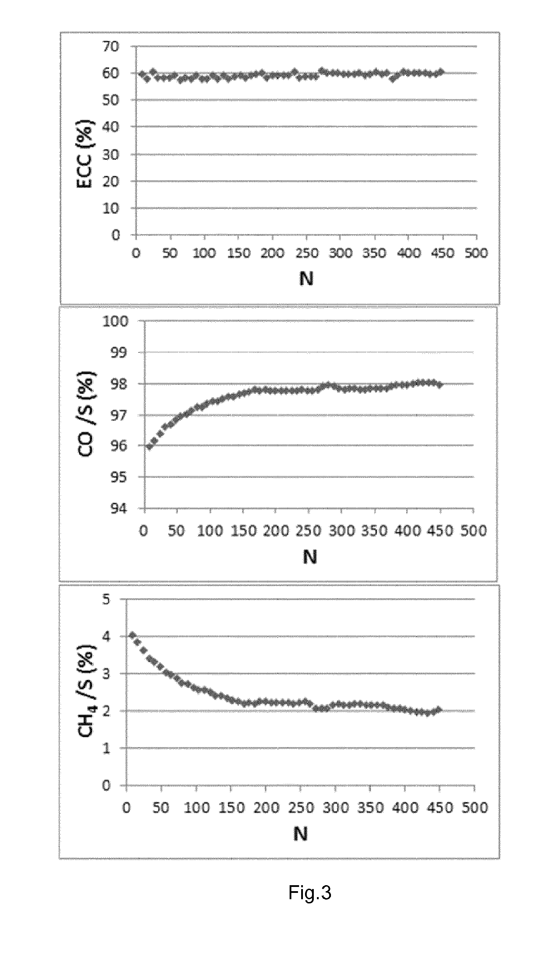

FIG.3 shows long-term performance for compound 6 of the present invention. The abbreviations represents as follows: N represents the number of cycles; ECC represents the efficient $CO_2$ conversion expressed in (%); CO/S represents CO selectivity expressed in (%); and $CH_4$/S represents $CH_4$ selectivity expressed in (%).

DETAILED DESCRIPTION OF THE INVENTION

All terms as used herein in this application, unless otherwise stated, shall be understood in their ordinary meaning as known in the art. Other more specific definitions terms as used in the present application are as set forth below and are intended to apply uniformly throughout the specification and claims unless an otherwise expressly set out definition provides a broader definition.

The term "hydrotalcite-type compound", "anionic clays", "hydrotalcite-type", and its abbreviation "HT" have the same meaning and are herein used interchangeable. The hydrotalcite-type compounds are materials with laminar structure represented by the following formula:

$$\left[ M^{2+}_{1-x} M^{3+}_{x} (OH)_2 \right]^{x+} \left( A^{n-} \right)_{\frac{x}{n}} \cdot mH_2O$$

where: M(II) represents a divalent cation; M(III) represents a trivalent cation, and A represents any interlaminar anion that compensates the positives charges.

Metals form octahedrons joining their edges to form positively charged bidimensional sheets. The positive residual charge is originated in the metal or trivalent cation. To neutralize this residual charge, it is necessary for there to be anions located among the sheets, which may be exchanged by others of chemical composition different from the initial one. Due to the polar and hydrophilic nature of the sheets and depending on the space vacated by the anions, a certain amount of water may be accommodated among the anions and among the sheets.

The term "calcined mixed-oxide obtainable from a layered double hydroxide-type" refers to the mixed-oxide obtained after the calcination of the layered double hydroxide-type, that is the mixed-oxide obtained after step (a) of the process as defined in the first aspect of the invention.

The term "multimetallic system supported on calcined mixed-oxide obtainable from a layered double hydroxide-type" refers to compound obtained in step (b) of the process as defined in the first aspect of the invention that comprises the calcined layered double hydroxide-type in form of mixed-oxide, one or more of $M^{2+}$ divalent metal cations M(II)" and/or one or more of $M^{3+}$ trivalent metal cations supported on it.

The term "multimetallic supported compound" refers to the compound obtained after step (c) of the process as defined in the first aspect of the invention that comprises the calcined layered double hydroxide-type in form of mixed-oxide, the alkaline-metal cation selected from the group consisting of a $M^{1+}$ alkaline-metal cation M(I) which is $K^{1+}$; a $M^{2+}$ alkaline-earth metal cation M(II)' which is $Ba^{2+}$; and combination thereof, a $M^{2+}$ divalent metal cation M(II)" which is $Cu^{2+}$, one or more of $M^{2+}$ divalent metal cations M(II)"' and/or one or more of $M^{3+}$ trivalent metal cations M(III)' supported on it.

The terms "supported on" or "deposited on" are used interchangeable and have the same meaning. They refer to a highly disperse compound of calcined metals that is above and in physical contact with the calcined mixed-oxide obtainable from a hydrotalcite type of step (a) and is prepared following steps (b), and (c) of the process as defined in the first aspect of the invention.

The term "Efficient $CO_2$ conversion" refers to the amount of carbon dioxide that is converted into valuable products (for instance CO and $CH_4$) in relation to the total amount of $CO_2$ fed throughout the process and represents a practical $CO_2$ conversion. The efficient $CO_2$ conversion is expressed in percentage and it is calculated by the following formula:

$$\text{Efficient CO}_2 \text{ conversion} \,(\%) = \frac{\sum \text{CO}_2 \text{ reduction products (mol)}}{\text{CO}_2 \text{ in total (mol)}} \cdot 100$$

wherein:

$CO_2$ in total (mol) is calculated as the integral of the area under the curve for the total cycle (capture + reduction) for the blank test, which is detected by FTIR;

$\Sigma$ $CO_2$ Reduction products (mol) are calculated as the sum of the integral of the areas under the curves for the total cycle (capture + reduction) during the experiment for the different valuable products generated from $CO_2$ reduction, which is detected by FTIR.

The term "selectivity to CO" and "selectivity to methane $CH_4$" or "selectivity to any other reduction product" refers to the molar ratio between the mols of the corresponding valuable reduction product in relation to the sum of the mols of all valuable reduction products.

$$\text{Selectivity to product } i \,(\%) = \frac{\text{mols of valuable product } i}{\sum \text{mols of valuable products}}$$

The term "Overall Process Yield" refers to the yield of the process respect to the main product

$$\text{Overall process Yield} \,(\%) = \frac{\text{Efficient CO}_2 \text{ conversion} \,(\%) \text{Selectivity to main product} \,(\%)}{100}$$

The term "percentage (%) by weight of the weight of the calcined metal supported on the mixed-oxide obtained from a layered double hydrotalcite-type" refers to the percentage of each component in relation to the mixed-oxide obtained from hydrotalcite type and the metal precursor after the drying and calcination step (b) of the process as defined in the first aspect of the invention.

The term "percentage (%) by weight of the weight of the calcined mixed-oxide obtained from hydrotalcite-type" refers to the percentage of each component in relation to the layered double hydroxide hydrotalcite- type after calcination step (a) of the process as defined in the first aspect of the invention.

The term "weight ratio" refers to the relation in weight of a given compound to another given compound, for instance, between the M(II)O and the M(III)$_2$O$_3$ of the layered double hydroxide hydrotalcite-type needed to the multimetallic supported compound.

The term "ppmv" refers to parts per million of a compound, for instance NOx, and SOx, by volume of gas stream.

The terms "precursor" refers to those inorganic salts that are formed by an inorganic anion and the metal cation that are finally forming part of the multimetallic supported compound. For instance, a "metal precursor" of the M(II)" $Cu^{2+}$ can be $Cu(NO_3)_2 \cdot 3H_2O$, being the anion $NO_3^{1-}$, and a "alkaline-metal precursor" of $M^{1+}$ $K^{1+}$ can be anhydrous $K_2CO_3$, being the anion $CO_3^{2-}$.

As it is illustrated in the examples, only the use of the multimetallic supported compound having the specific composition as defined in the present invention, allows having a strong interaction between the multimetallic supported compound of the invention and the gas stream to sequester carbon dioxide but not so strong to prevent the catalytic reduction of the carbon dioxide by the reducing agent. It allows having a selective reduction of carbon dioxide to carbon monoxide.

As it is defined above, an aspect of the invention relates to a multimetallic supported compound which comprises a multimetallic system supported on a calcined mixed-oxide obtainable from a layered double hydroxide hydrotalcite-type as defined above.

In an embodiment of the invention, optionally in combination with one or more features of the various embodiments described above or below, the multimetallic supported compound is that wherein M(II) is $Mg^{2+}$ and M(III) is $Al^{3+}$. In an embodiment, optionally in combination with one or more features of the various embodiments described above or below, the multimetallic supported compound is that wherein calcined mixed-oxide obtained from hydrotalcite-type has an amount of M(II) which is in form of M(II)O comprised from 4 to 35% by weight of the weight of calcined mixed-oxide obtained from hydrotalcite-type.

The multimetallic supported compound of the invention can further comprise additional metals, which can modify its physical, chemical, catalytic and $CO_2$ capture properties. This metals can be either in metallic form or as metal oxide or even in both forms.

In an embodiment, optionally in combination with one or more features of the various embodiments described above or below, the multimetallic supported compound is that which comprises the $M^{1+}$ alkaline-metal cation M(I) which is $K^{1+}$; and the amount of $K^{1+}$ is comprised from 2 to 50% by weight of the weight of the calcined metal supported on the mixed-oxide obtained from hydrotalcite-type of step (b) of the process of the invention; preferably the amount of $K^{1+}$ is comprised from 5 to 35 % by weight of the weight of the calcined metal supported on the mixed-oxide obtained from hydrotalcite-type of step (b) of the process of the invention; more preferably the amount of $K^{1+}$ is comprised from 5 to 20 % by weight of the weight of the calcined metal supported on the mixed-oxide obtained from hydrotalcite-type of step (b) of the process of the invention

In an alternative embodiment, optionally in combination with one or more features of the various embodiments described above or below, the multimetallic supported compound is that which comprises the $M^{2+}$ alkaline-earth metal cation M(II)' which is $Ba^{2+}$; and the amount of $Ba^{2+}$ is comprised from 5 to 50 by weight of the weight of calcined metal supported on the mixed-oxide obtained from hydrotalcite-type of step (b); preferably the amount of $Ba^{2+}$ is comprised from 5 to 35% by weight of the weight of calcined metal supported on the mixed-oxide obtained from hydrotalcite-type of step (b); more preferably the amount of $Ba^{2+}$ is comprised from 10 to 30% by weight of the weight of calcined metal supported on the mixed-oxide obtained from hydrotalcite-type of step (b).

In an alternative embodiment, optionally in combination with one or more features of the various embodiments described above or below, the multimetallic supported compound is that which comprises a combination of the $M^{1+}$ alkaline-metal cation M(I) which is $K^{1+}$; and $M^{2+}$ alkaline-earth metal cation M(II)' which is $Ba^{2+}$; and the amount of the combination of $K^{1+}$ and $Ba^{2+}$ is comprised from 2 to 50% by weight of the weight of calcined metal supported on the mixed-oxide obtained from hydrotalcite-type of step (b); preferably the amount of the combination of $K^{1+}$ and $Ba^{2+}$ is comprised from 5 to 35% by weight of the weight of calcined metal supported on the mixed-oxide obtained from hydrotalcite-type of step (b), more preferably the amount of the combination of $K^{1+}$ and $Ba^{2+}$ is comprised from 5 to 20% by weight of the weight of calcined metal supported on the mixed-oxide obtained from hydrotalcite-type of step (b).

In an embodiment, optionally in combination with one or more features of the various embodiments described above or below, the multimetallic supported compound of the invention is that wherein the $M^{2+}$ divalent metal cation M(II)''', and the $M^{3+}$ trivalent metal cation M(III)' are absent.

In an embodiment, optionally in combination with one or more features of the various embodiments described above or below, the multimetallic supported compound of the invention is that having one or more of $M^{2+}$ divalent metal cations M(II)''' selected from the group consisting of $Zn^{2+}$, $Fe^{+2}$, $Pt^{2+}$, $Pd^{2+}$, $Mn^{2+}$, $Ni^{2+}$, $Co^{2+}$, $Au^{+2}$, and $Sn^{2+}$; and one or more of $M^{3+}$ trivalent metal cations M(III)' selected from the group consisting of $Fe^{3+}$, and $Cr^{3+}$.

In an embodiment, optionally in combination with one or more features of the various embodiments described above or below, the multimetallic supported compound of the invention is that having one or more of $M^{2+}$ divalent metal cations M(II)''' selected from the group consisting of $Zn^{2+}$, $Fe^{+2}$, $Pt^{2+}$, $Pd^{2+}$, $Mn^{2+}$, $Ni^{2+}$, $Co^{2+}$, $Au^{+2}$, and $Sn^{2+}$ and the $M^{3+}$ trivalent metal cation M(III)' is absent. In a preferred embodiment, the multimetallic supported compound of the invention is that wherein the $M^{2+}$ divalent metal cation M(II)''' is $Zn^{2+}$ and the $M^{3+}$ trivalent metal cation M(III)' is absent. In an embodiment, optionally in combination with one or more features of the various embodiments described above or below, the multimetallic supported compound is that wherein the $M^{2+}$ divalent metal cation M(II)''' is $Zn^{2+}$ and the $M^{3+}$ trivalent metal cation M(III)' is absent; and the amount of $Zn^{2+}$ is comprised from 20 to 40% by weight of the sum of the weights of the ZnO and CuO is in form of ZnO.

In an embodiment, optionally in combination with one or more features of the various embodiments described above or below, the multimetallic supported compound is that wherein the multimetallic supported compound of the invention is that wherein the $M^{2+}$ divalent metal cation M(II)''' is $Zn^{2+}$ and the $M^{3+}$ trivalent metal cation M(III)' is absent; and an amount of $Zn^{2+}$ comprised from 20 to 40% by weight of the sum of the weights of the ZnO and CuO is in form of ZnO and an amount of M(II)'' $Cu^{2+}$ comprised from 60 to 80% by weight of the sum of the weights of the ZnO and CuO is in form of CuO. In an embodiment, optionally in combination with one or more features of the various embodiments described above or below, the multimetallic supported compound is that having one or more of $M^{3+}$ trivalent metal cations M(III)' selected from the group consisting of $Fe^{3+}$, and $Cr^{3+}$ and the $M^{2+}$ divalent metal cation M(II)''' is absent. In a preferred embodiment, optionally in combination with one or more features of the various embodiments described above or below, the multimetallic supported compound of the invention is that wherein the one or more of $M^{3+}$ trivalent metal cations M(III)' is a mixture of $Fe^{3+}$ and $Cr^{3+}$, and the $M^{2+}$ divalent metal cation M(II)''' is absent. In an embodiment, optionally in combination with one or more features of the various embodiments described above or below, the multimetallic supported compound of the invention is that wherein the $M^{3+}$ trivalent metal cation M(III)' is a mixture of $Fe^{3+}$ and $Cr^{3+}$, and the $M^{2+}$ divalent metal cation M(II)''' is absent; and an amount of $Fe^{3+}$ comprised from 75 to 95% by weight of the weight of the sum of the weights of $Fe_2O_3$, CuO, and $Cr_2O_3$ is in form of $Fe_2O_3$; an amount of M(II)'' Cu comprised from 1 to 10% by weight of the weight of the sum of the weights of $Fe_2O_3$, CuO, and $Cr_2O_3$ is in form of CuO; and an amount of $Cr^{3+}$ comprised from 4 to 15% by weight of the weight of the sum of the weights of $Fe_2O_3$, CuO, and $Cr_2O_3$ is in form of $Cr_2O_3$.

In an embodiment, optionally in combination with one or more features of the various embodiments described above or below, the multimetallic supported compound is that having one or more of $M^{3+}$ trivalent metal cations M(III)' selected from the group consisting of $Fe^{3+}$, and $Cr^{3+}$ and the $M^{2+}$ divalent metal cation M(II)''' is $Pt^{2+}$. In a preferred embodiment, optionally in combination with one or more features of the various embodiments described above or below, the multimetallic supported compound of the invention is that wherein the one or more of $M^{3+}$ trivalent metal cations M(III)' is a mixture of $Fe^{3+}$ and $Cr^{3+}$, and the $M^{2+}$ divalent metal cation M(II)''' is $Pt^{2+}$. In an embodiment, optionally in combination with one or more features of the various embodiments described above or below, the multimetallic supported compound of the invention is that wherein the one or more of $M^{3+}$ trivalent metal cations M(III)' is a mixture of $Fe^{3+}$ and $Cr^{3+}$, and the $M^{2+}$ divalent metal cation M(II)''' is $Pt^{2+}$; and an amount of $Fe^{3+}$ comprised from 74 to 95% by weight of the weight of the sum of the weights of $Fe_2O_3$, CuO, $Cr_2O_3$ and PtO is in form of $Fe_2O_3$; an amount of M(II)'' Cu comprised from 1 to 10% by weight of the weight of the sum of the weights of $Fe_2O_3$, CuO, $Cr_2O_3$ and PtO is in form of CuO; an amount of $Cr^{3+}$ comprised from 4 to 15% by weight of the weight of the sum of the weights of $Fe_2O_3$, CuO, $Cr_2O_3$ and PtO is in form of $Cr_2O_3$; and an amount of $Pt^{2+}$ comprised from 0.1 to 1 % by weight of the weight of the sum of the weights of $Fe_2O_3$, CuO, $Cr_2O_3$ and PtO is in form of PtO.

The multimetallic supported compound defined above is obtainable by a process comprising: (a) calcinating a layered double hydroxide hydrotalcite-type comprising a mixture of M(II) cation, M(III) cation, and a n-valent anion selected from the group consisting of $NO_3^-$, $SO_4^-$, $CO_3^{2-}$, $CH_3CO_2^-$, $Cl^-$, $Br^-$, and $F^-$, at a temperature comprised from 300°C to 800°C for a period of time comprised from 2 to 10h to obtain the calcined mixed-oxide obtainable from a hydrotalcite-type having a weight ratio of $M(II)O:M(III)_2O_3$ comprised from 4:96 to 50:50; (b) impregnating the calcined mixed-oxide obtainable from a hydrotalcite-type of step (a) with a metal precursor of the M(II)''$Cu^{2+}$; followed by drying the paste thus obtained at a temperature comprised from 60 to 150°C; and calcinating the paste at a temperature comprised from 300 to 800°C for a period of time comprised from 2 to 10 hours to obtain a calcined metal supported on the mixed-oxide obtained from hydrotalcite-type; and (c) impregnating the calcined metal supported on the mixed-oxide obtained from hydrotalcite-type of step (b) with the alkaline-metal precursor of the M(I) $K^{1+}$; or the M(II)' $Ba^{2+}$; or combination thereof; followed by drying the paste thus obtained at a temperature comprised from 60 to 150°C; and calcinating the paste at a temperature comprised from 300 to 800°C for a period of time comprised from 2 to 10 hours, obtaining the multimetallic supported compound; with the proviso that: wherein when the multimetallic system comprises a combination of a $M^{1+}$ alkaline-metal cation M(I) which is $K^{1+}$ and a $M^{2+}$ alkaline-earth metal cation M(II)' which is $Ba^{2+}$, then step (c) of the process comprises: impregnating the calcined metal supported on the mixed-oxide obtained from a hydrotalcite-type of step (b) with a mixture of the alkaline-metal precursor of M(I) $K^{1+}$ and an alkaline-earth metal precursor of M(II)' $Ba^{2+}$; wherein when the multimetallic system comprises one or more of $M^{2+}$ divalent metal cations M(II)''', or one or more of $M^{3+}$ trivalent metal cations M(III)', then step (b) of the process comprises impregnating the calcined mixed-oxide obtainable from a hydrotalcite-type of step (a) with a mixture of the metal precursor of the M(II)''$Cu^{2+}$ and one or more of the precursors of the $M^{2+}$ divalent metal cation M(II)''' or one or more of the metal precursors of the $M^{3+}$ trivalent metal cation M(III)'; and wherein when the multimetallic system comprises one or more of $M^{2+}$ divalent metal cations M(II)''' and one or more of $M^{3+}$ trivalent metal cations M(III)', then step (b) of the process comprises impregnating the calcined mixed-oxide obtainable from a hydrotalcite-type of step (a) with a mixture of the metal precursor of the M(II)''$Cu^{2+}$ and one or more of the precursors of the $M^{2+}$ divalent metal cation M(II)''' and one or more of the metal precursors of the $M^{3+}$ trivalent metal cation M(III)'.

In an embodiment, optionally in combination with one or more features of the various embodiments described above or below, the multimetallic supported compound is that wherein it is obtainable by the process as defined above, wherein in the layered double hydroxide hydrotalcite type compound of step (a) M(II) is $Mg^{2+}$; M(III) is $Al^{3+}$.; and n-valent anion is $CO_3^{2-}$ having the formula (I)

$$Mg_{2x}Al_2(OH)_{4x+4}CO_3\ nH_2O \qquad (I)$$

wherein x is from 0.05 to 1.2; and n is an integer of 1 to 6; preferably, wherein x is from 0.05 to 0.5.

In an embodiment, optionally in combination with one or more features of the various embodiments described above or below, the multimetallic system comprises a combination of a $M^{1+}$ alkaline-metal cation M(I) which is $K^{1+}$ and a $M^{2+}$ alkaline-earth metal cation M(II)' which is $Ba^{2+}$, and step (c) of the process comprises: impregnating the calcined metal supported on the mixed-oxide obtained from a hydrotalcite-type of step (b) with a mixture of the alkaline-metal precursor of M(I) $K^{1+}$ and an alkaline-earth metal precursor of M(II)' $Ba^{2+}$.

In an embodiment, optionally in combination with one or more features of the various embodiments described above or below, the multimetallic system comprises one or more of $M^{2+}$ divalent metal cations M(II)''', or one or more of $M^{3+}$ trivalent metal cations M(III)', and step (b) of the process comprises impregnating the calcined mixed-oxide obtainable from a hydrotalcite-type of step (a) with a mixture of the metal precursor of the M(II)''$Cu^{2+}$ and one or more of the precursors of the $M^{2+}$ divalent metal cation M(II)''' or one or more of the metal precursors of the $M^{3+}$ trivalent metal cation M(III)'.

In an embodiment, optionally in combination with one or more features of the various embodiments described above or below, the multimetallic system comprises one or more of $M^{2+}$ divalent metal cations M(II)''' and one or more of $M^{3+}$ trivalent metal cations M(III)', and step (b) of the process comprises impregnating the calcined mixed-oxide obtainable from a hydrotalcite-type of step (a) with a mixture of the metal precursor of the M(II)''$Cu^{2+}$ and one or more of the precursors of the $M^{2+}$ divalent metal cation M(II)''' and one or more of the metal precursors of the $M^{3+}$ trivalent metal cation M(III)'.

The multimetallic supported compound of the invention may be defined by its preparation process as defined above and therefore, the multimetallic supported compound obtainable by the process above is considered part of the invention. For the purposes of the invention the expressions "obtainable", "obtained" and equivalent expressions are used interchangeably, and in any case, the expression "obtainable" encompasses the expression "obtained".

The process as defined in the present invention comprises a sequential impregnation process using an incipient wetness impregnation method. This method comprises two independent impregnation steps. Firstly, the process comprises a first impregnation of the precursor of the $M^{2+}$ divalent metal cation M(II)'' $Cu^{2+}$, optionally in combination with one or more precursors of the additional metal cations as defined above and below (M(II)''', and M(III)'), on the surface of the calcined layered double hydroxide hydrotalcite-type. Secondly, the process comprises the second impregnation of the $M^{1+}$ alkaline-metal cation M(I) $K^{1+}$, the $M^{2+}$ alkaline-earth metal cation M(II)' $Ba^{2+}$, or combination thereof.

In an embodiment, optionally in combination with one or more features of the various embodiments described above or below, the multimetallic supported compound is that wherein it is obtainable by the process as defined above, wherein M(II) is $Mg^{2+}$, and M(III) is $Al^{3+}$.

In an embodiment, optionally in combination with one or more features of the various embodiments described above or below, the multimetallic supported compound is that wherein it is obtainable by the process as defined above, being the weight ratio of $M(II)O:M(III)_2O_3$ comprised from 4:96 to 50:50; preferably comprised from 5:95 to 30:70; more preferably the weight ratio of $M(II)O:M(III)_2O_3$ is 5:95 to 20:80.

In a preferred embodiment, optionally in combination with one or more features of the various embodiments described above or below, the multimetallic supported compound is that wherein it is obtainable by the process as defined in the present invention, wherein the n-valent anion is $CO_3^{2-}$.

The calcinating steps of step (a), step (b), and step (c) can be carried out following any appropriate method disclosed in the state of the art, and in any suitable equipment. In an embodiment of the invention, the calcinating steps of the process of the invention are carried out in an oven with static air.

In an embodiment, optionally in combination with one or more features of the various embodiments described above or below, the multimetallic supported compound is that wherein it is obtainable by the process as defined above, wherein the calcinating step of step (a) is carried out at a temperature comprised from 400°C to 600°C. In an embodiment, optionally in combination with one or more features of the various embodiments described above or below, the multimetallic supported compound is that wherein it is obtainable by the process as defined above, wherein the calcinating step of step (a) is carried out for a period of time comprised from 2 to 5 hours. In an embodiment, optionally in combination with one or more features of the various embodiments described above or below, the multimetallic supported compound is that wherein it is obtainable by the process as defined above, wherein the calcinating step of step (a) is carried out at a temperature of 600°C for 3 hours.

In an embodiment, optionally in combination with one or more features of the various embodiments described above or below, the multimetallic supported compound is that wherein it is obtainable by the process as defined above, wherein the calcination step of steps (b) and (c) are carried out at a temperature comprised from 400°C to 600°C; preferably comprised from 450 to 550°C. In an embodiment, optionally in combination with one or more features of the various embodiments described above or below, the multimetallic supported compound is that wherein it is obtainable by the process as defined above, wherein the calcination step of steps (b) and (c) are carried out for a period of time comprised from 4 to 8 hours. In an embodiment, optionally in combination with one or more features of the various embodiments described above or below, the multimetallic supported compound is that wherein it is obtainable by the process as defined above, wherein the calcination step of steps (b) and (c) are carried out at a temperature of 500°C for 5 hours.

The drying steps of the impregnated and calcined metal supported on the mixed-oxide derived from hydrotalcite-type of steps (b) and (c) can be carried out following any appropriate method disclosed in the state of the art, and in any suitable equipment. In an embodiment of the invention, the drying steps of the process of the invention are carried out in a stove.

In an embodiment, optionally in combination with one or more features of the various embodiments described above or below, the multimetallic supported compound is that wherein it is obtainable by the process as defined above, wherein the drying step of steps (b) and (c) are carried out at a temperature comprised from 80°C to 130°C; preferably comprised form 95°C to 120°C. In an embodiment, optionally in combination with one or more features of the various embodiments described above or below, the multimetallic supported compound is that wherein it is obtainable by the process as defined above, wherein the drying step of steps (b) and (c) is carried out for a period of time comprised from 8 to 12 hours.

The process for the preparation of the multimetallic supported compound as defined above and below is also part of the invention. All the embodiments disclosed above for the starting materials, intermediates, and reactants involved in each one of the steps of the process, that is steps (a), (b), and (c), as well as for the experimental conditions of calcination, impregnation, and drying steps applies also for the process for the preparation of the multimetallic supported compound.

It is also part of the invention a one-pot process for capturing and reducing carbon dioxide which comprises the use of the multimetallic supported compound of the present invention. In particular, the one-pot process of the invention comprises: (a) contacting a multimetallic supported compound as defined above in the present invention with a gas stream containing carbon dioxide to obtain the multimetallic supported compound having the carbon dioxide adsorbed; and (b) contacting the multimetallic supported compound obtained in step (a), with a reducing agent selected from the group consisting of $H_2$, an hydrogen source, and mixture thereof; wherein: the temperature of steps (a) and (b) is comprised from 300°C to 750°C; and the pressure of steps (a) and (b) is comprised from 1 to 80 bar.

The term "one-pot" process refers to that process where $CO_2$ capture and its reduction can be carried out over the same reactor, using the same multimetallic supported compound, in which no prior concentration of the gas stream containing the dilute $CO_2$ is required. The multimetallic supported compound having the carbon dioxide adsorbed may be considered as intermediate state that after contacting with the reducing agent the multimetallic supported compound, $CO_2$ capture capability is regenerated, without the need to remove or separate the catalyst from the reactor, while reduce products are release during step (b).

In step (a) of the one-pot process of capturing and reducing carbon dioxide, the multimetallic supported compound of the invention is contacted with a gas stream containing carbon dioxide, so that carbon dioxide becomes adsorbed to the catalyst composition. The gas stream may be ambient air, or it may be a gas that is enriched in carbon dioxide. Examples of gas stream enriched in carbon dioxide include shale gas (a mixture of carbon dioxide and methane); gases obtained in the combustion of carbon-based fuel, such as engine exhaust; and flue gas from a power plant or other industrial process. Carbon dioxide can be also produced in other chemical reactions, such as a reforming reaction of a hydrocarbon or coal gasification, or in a water shift reaction. In a particular embodiment, optionally in combination with one or more features of the various embodiments described above or below, the gas stream used in the one-pot process for capturing and reducing carbon dioxide is a gas stream containing carbon dioxide, as well as other oxides, for instance sulphur oxides (SOx), such as $SO_2$ or $SO_3$ or nitrogen oxides (NOx), such as $N_2O$, $NO$, $NO_2$, $N_2O_4$, $N_2O_3$ with SOx and NOx at ppmv level.

Although the content of NOx and SOx is not so high in comparison of the amount of carbon dioxide, these compounds has been recognised to have a negative environmental impact. Therefore, it is needed to avoid their emission to the atmosphere by removimg them from the gas stream. Some methods have been disclosed in the state of the art for their removal. However, these methods implies complicated and expensive equipment. In a particular embodiment of the invention, optionally in combination with one or more features of the various embodiments described above or below, the one-pot process for capturing and reducing carbon dioxide of the invention, further comprises capturing and reducing $NO_x$, $SO_x$, and mixture thereof, wherein $NO_x$ is selected from the group consisting of $N_2O$, $NO$, $NO_2$, $N_2O_4$, $N_2O_3$, and mixture thereof; and $SO_x$ is selected from the group consisting of $SO_2$, $SO_3$, and mixture thereof.

After completion of step (b) of the one-pot process for capturing and reducing carbon dioxide, the catalyst is regenerated by desorbing any reaction products, recovering the required $CO_2$ capture capability, and re-using the multimetallic supported compound in step (a). Re-usage of the multimetallic supported compound is advantageous because allows carrying out the process of capturing and reducing carbon dioxide for step (a) without need any additional or external regeneration step.

The reaction products can be carbon monoxide, methanol, methane, and alkanes, such as ethane, propane, and butane or methylamines in case of using ammonia as the hydrogen source.

In an embodiment of the invention, optionally in combination with one or more features of the various embodiments described above or below, both steps (a) and (b) of the one-pot process for capturing and reducing carbon dioxide are carried out at a similar temperature comprised from 350 to 550°C; preferably comprised from 400 to 450°C.

In an embodiment of the invention, optionally in combination with one or more features of the various embodiments described above or below, the one-pot process for capturing and reducing carbon dioxide further comprises a previous step of heating the gas stream to the temperature which step (a) is carried out, performing heat integration between cool gas containing $CO_2$ stream with, hot stream leaving the reduction step (b), using additional external heat sources if required to reach the capture step (a) required temperature. In an embodiment the gas stream is heated to a temperature comprised from 300 to 750°C; preferably comprised from 350 to 550°C; more preferably comprised from 400 to 550°C.

In an embodiment of the invention, optionally in combination with one or more features of the various embodiments described above or below, both steps of the one-pot process for capturing and reducing carbon dioxide are carried out at a similar pressure comprised from 1 to 30 bar; preferably comprised from 1 to 10 bar; more preferably comprised from 1 to 5 bar. In a particular embodiment, optionally in combination with one or more features of the various embodiments described above or below, both steps of the one-pot process for capturing and reducing carbon dioxide are carried out at a pressure comprised from 1 to 3 bar.

In an embodiment of the invention, optionally in combination with one or more features of the various embodiments described above or below, the one-pot process for capturing and reducing carbon dioxide further comprises a previous step of compressing the gas stream to the pressure which step (a) is carried out. In an embodiment the gas stream is compressed until a pressure comprised from 1 to 80 bar; preferably, comprised from 1 to 30 bar; preferably comprised from 1 to 10 bar; more preferably comprised from 1 to 5 bar; particularly comprised from 1 to 3 bar.

In an embodiment of the invention, optionally in combination with one or more features of the various embodiments described above or below, both steps of the one-pot process for capturing and reducing carbon dioxide is carried out at a temperature comprised from 350 to 550°C; and at a pressure comprised from 1 to 30 bar; preferably at a temperature comprised from 400 to 550°C; and at a pressure comprised from 1 to 5 bar.

In an embodiment, the multimetallic supported compound of the invention is in form of an immobilized shaped solid, compatible with a fixe bed reactor. In an embodiment of the invention, the multimetallic supported compound is in form of an immobilized shaped solid. For instance, the immobilized shaped solid can be a pellet, a tablet, a sphere, and an extrudate or any other shape disclosed in the state of the art.

In step (b) of the one-pot process for capturing and reducing carbon dioxide of the invention, the multimetallic supported compound of the invention having the carbon dioxide in contact with a reducing agent selected from $H_2$ and hydrogen source. In an embodiment of the invention, optionally in combination with one or more features of the various embodiments, the reducing agent is $H_2$. In an embodiment, optionally in combination with one or more features of the various embodiments, the one-pot process for capturing and reducing carbon dioxide further comprises a previous step of producing $H_2$. The $H_2$ can be produced by any method known in the art, for instance by ex situ electrolysis of water; by a reform reaction of a hydrocarbon; by gasification of coal or steam methane reforming.

In an embodiment of the invention, optionally in combination with one or more features of the various embodiments, the reducing agent is a hydrogen source. In a preferred embodiment, optionally in combination with one or more features of the various embodiments, the one-pot process for capturing and reducing carbon dioxide is that wherein the hydrogen source is produced from a low carbon production method. Examples of suitable hydrogen production methods include electrolysis of water using renewable energies or nuclear power.

In an embodiment of the invention, optionally in combination with one or more features of the various embodiments described above or below, the reaction time of both steps (a) and (b) of the one-pot process for capturing and reducing carbon dioxide are equal. It is advantegeous because it allows synchronizing tthe capture step (a) and the reduction step (b) having two reactors working in paralel. It means that the process of the invention allows having a system formed by several reactors conneted in paralel so that while one reactor operates in the capture (step (a)) by injecting the gas stream containing $CO_2$ to the multimetallic supported compound, the other reactor operates in the reduction (step (b)) by injecting the reducing agent (cf. Fig. 1).

In an embodiment of the invention, optionally in combination with one or more features of the various embodiments described above or below, the one-pot process of capturing and reduction of carbon dioxide further comprises an additional step of inertization by introducing an inert gas; preferably by the introduction of $N_2$ or He.

In an embodiment of the invention, optionally in combination with one or more features of the various embodiments described above or below, the inertization step is carried out after step (a). In an alternative embodiment of the invention, optionally in combination with one or more features of the various embodiments described above or below, the inertization step is carried out after step (b). In an alternative embodiment of the invention, optionally in combination with one or more features of the various embodiments described above or below, the inertization step is carried out after both steps (a) and (b).

The inertization step carried out after step (a) also prevents the dilution of the reduction product with $CO_2$; and allows recovering $CO_2$ from the inert sweep by directly recycling the stream to the capture step (a). It is also advantegeous from a safety point of view because in case of $O_2$ exisisting on the $CO_2$ containing gas stream the presence of $O_2$ in the reduction step is avoided.

Further, the inertization step carried out after step (b) also avoids the presence of CO in the capture step and the presence of $H_2$ in the capture step.

In an embodiment of the invention, optionally in combination with one or more features of the various embodiments described above or below, the one-pot process of capturing and reduction of carbon dioxide is carried out in a multitubular reactor.

The carbon monoxide is obtained in combination with other reducting byproducts and either, hydrogen and/or carbon dioxide. In an embodiment, optionally in combination with one or more features of the various embodiments described above or below, the carbon monoxide obtained in the one-pot process for capturing and reducing carbon dioxide is in form of syngas. The term "syngas", "synthetic gas" or "synthesis gas" refers to a gas mixture that contains varying amounts of hydrogen, carbon monoxide, and/or carbon dioxide. The composition of the syngas varies according to the way of its obtention. Most commonly, syngas contains molecular hydrogen as the main component, and an amount of carbon monoxide higher than the amount of carbon dioxide. The syngas can be used either for methanol synthesis and its subsequent transformation into gasoline or in Fischer Tropsch processes. The use of the syngas obtained depends on its compositions. According to the composition of the syngas, the syngas can be use directly or its composition can be modify for reducing the total amount of carbon dioxide and/or $H_2$. In an embodiment of the invention, optionally in combination with one or more features of the various embodiments described above or below, the one-pot process of capturing and reduction of carbon dioxide further comprises additional steps of reducing the amount of carbon dioxide and/or $H_2$. This process can be carried out by any method known in the state of the art. In a particular embodiment, the selective reduction of the amount of carbon dioxide and/or $H_2$ is carried out by the partial selective recovery of $H_2$ and/or $CO_2$, for instance by applying selective adsorbents, or membranes, where $CO_2$ would be recycle to the capture step (a) and $H_2$ would be recycle to the reduction step (b).

In a particular embodiment of the process of the invention is disclosed below.

The $CO_2$ containing gas stream (1) from the stack of an industrial process or power sector, having $CO_2$, N, water vapour, 02, NOx, and SOx is slightly compressed through blower (C-101), reaching enough pressure to overcome pressure loss the process.

Compressed stream (2) would need to reach the temperature needed for the capture step, this requires a preheating step using heat-exchanger (E-201) between prior stream (2) and outlet stream (8) from capture step after having pass through the shell side of the reduction reactor reaching a temperature near to that of the capture step, in case is necessary to supply aditional energy to reach the required temperature an auxiliary heat-exchanger (E-202) maybe used.

Gas stream conditioned in pressure and temperature (6) is fed downwards in the tube side of the multitubular capture step reactor (R-201).

Inside reactor tubes the multimetallic supported compound is placed, so $CO_2$ present in the gas stream is selectively adsorbed over the multimetallic supported compound surface, releasing heat of adsorption to the gas stream free of $CO_2$ leaving the capture step (7) that would be heated up.

Gas stream (7) is fed upwards through the shell side of the multitubular reduction reactor (R-202), totally or partially suplying heat required to compensate sligthly endothermic heat of RWGs reaction, mantaining reaction temperature inside the tubes around the optimal value and similar to the temperature of the capture step.

Gas stream free of $CO_2$ once it has been cooled (9) on heat-exchanger (E-201) is send to the stack at an appropiate temperature and released to the atmosphere (27).

Capture step reactor (R-201) once the multimetallic supported compound reach its $CO_2$ saturation point would be changed to an optionally inertization step with $N_2$ (4), sweeping the death volume prior to the start of the reduction step with $H_2$, this sweep step can also be accomplished using a vaccum pump.

Sweep stream (15) comprising mainly $N_2$ with some $CO_2$ and other minor components would be recycle to the feed compressor of capture step (C-101), increasing the overall $CO_2$ capture efficiency of the process. A small purge (16) is done to avoid inert build-up.

Once the inertization step is finished, reactor (R-201) would change to reduction mode changing valve (V-202) position, allowing $H_2$ feed (12) to the reactor.

On the other hand a low carbon footprint hydrogen source, that is, obtained from renewables or nuclear energy sources, would be used to reduce $CO_2$ adsorbed over the multimetallic supported compound. $H_2$ would be compressed and pre-heated with the outlet hot stream (13) from the reduction reactor through heat-exchanger (E-203) and would be fed trough the tube side of the reduction reactor (R-202). $H_2$ fed into the reactor would react with the $CO_2$ adsorbed over the multimetallic supported compound, realeasing $CO_2$ reductions products, mainly CO, together with excess $H_2$, unreacted $CO_2$, water also formed in the RWGs reaction and a small amount of $CH_4$ (13).

Once the outlet stream (8) is cooled on heat-exchanger (E-203), it is further cooled on heat-exchanger (E-204), so water is removed at the bottom (26) of a flash equipment (D-301). Condensed water recovered would be recycled, after requiered purification steps (in needed), as a water source to the electrolysis process generating new $H_2$, reducing the overall water consumption.

Gas stream (20) from the top of the flash equipment (D-301) may require aditional purification steps to ajust the $(H_2-CO_2)/(CO+CO_2)$ molar ratio, needed for later methanol synthesis or Fischer Tropsch process.

Purifications steps would partially recover $H_2$ and/or $CO_2$ present on the gas stream (20). Those purification purification steps are represente by D-302 and include selective adsortion or membranes process or any other defined in the state of the art.

Gas stream (21) would represent a $H_2$ rich stream that woul be recoverd from D-302, a small amount would be purge in other to avoid inert build-up (23).This stream can use as a fuel gas recovering its energy content.

Gas stream (24) would be compressed through compressor (C-301) and recycled together with the make-up hydrogen stream (10) to the reduction reactor (R-202). From D-302 a gas stream (25) would be also obtained with the optimal $(H_2-CO_2)/(CO+CO_2)$ molar ratio.

Finally once the reduction step is finished on reduction reactor (R-202), this would be optionally changed to and inertization step with N2 (4), sweeping the death volume a generating a gas stream (18), that could be valorized as fluel gas.Once inertization step is finished , reduction reactor (R-202) would change to capture mode, changing valve (V-201), allowing feeding the $CO_2$ containing gas stream (6) to the reactor.

Throughout the description and claims the word "comprise" and variations of the word, are not intended to exclude other technical features, additives, components, or steps. Furthermore, the word "comprise" encompasses the case of "consisting of". Additional objects, advantages and features of the invention will become apparent to those skilled in the art upon examination of the description or may be learned by practice of the invention. The following examples and drawings are provided by way of illustration, and they are not intended to be limiting of the present invention. Reference signs related to drawings and placed in parentheses in a claim, are solely for attempting to increase the intelligibility of the claim, and shall not be construed as limiting the scope of the claim. Furthermore, the present invention covers all possible combinations of particular and preferred embodiments described herein.

## EXAMPLES

## 1. MULTIMETALLIC SUPPORTED COMPOUNDS

### 1A. Composition of multimetallic supported compound

Table 1 shows the qualitative and quantitative composition of the multimetallic supported compounds 1-5 of the present invention, and the comparative multimetallic supported compounds 1-2.

The amount of each component is expressed in percentage by weight of the weight of the total amount of the multimetallic supported compound.

**Table 1**

| Compound | Components (%) | | | | | | | | | |
|---|---|---|---|---|---|---|---|---|---|---|
| | M(II)O | M(III)$_2$O$_3$ | M(II)" | M(I) | Additional metals | | | Molar ratio | | |
| | MgO | Al$_2$O$_3$ | Cu | K | Zn | Fe | Cr | Cu/Zn | Fe/Cr | Fe/Cu |
| **1** | 4.13 | 78.52 | 8.26 | 9.09 | - | - | - | - | - | - |
| **2** | 16.53 | 66.11 | 8.26 | 9.09 | - | - | - | - | - | - |
| **3** | 24.80 | 57.86 | 8.26 | 9.09 | - | - | - | - | - | - |
| **4** | 16.53 | 66.11 | 8.26 | 9.09 | - | - | - | - | - | - |
| **5** | 16.67 | 66.67 | 6.04 | 8.33 | 2.29 | - | - | 2.7 | - | - |
| **6** | 16.51 | 66.06 | 0.25 | 9.09 | - | 7.43 | 0.66 | - | 10.5 | 33.8 |
| **Comp.1** | 52.07 | 30.58 | 8.26 | 9.09 | - | - | - | - | - | - |
| **Comp.2** | 57.86 | 24.80 | 8.26 | 9.09 | - | - | - | - | - | - |

**1B. Preparation Process of the multimetallic supported compound**

**Example 1: Preparation of the multimetallic supported compound 4**

(a) A layered double hydroxide hydrotalcite type compound (SASOL PMG-20) was calcined under static air at 600°C for 3 hours to obtain a calcined mixed-oxide obtainable from the hydrotalcite-type, having 20% of MgO and 80% of $Al_2O_3$.

(b) A dissolution formed by a mixture of 1.1g of $Cu(NO_3)_2 \cdot 3H_2O$ in 5 mL of water milli-Q was dropwise added to a 4g of the calcined mixed-oxide obtainable from the hydrotalcite-type obtained in step (a). Then, the impregnated compound was dried overnight at 100°C under static air. Finally, the dried compound was calcined under static air at 500°C for 5h.

(c) A dissolution formed by a mixture of 0.70 g of anhydrous $K_2CO_3$ in water milli-Q was dropwise added to 4 g of the calcined metal supported on the mixed-oxide derived from hydrotalcite-type obtained in step (b). Then, the impregnated compound was dried overnight at 100°C in the stove. Finally, the dried compound was calcined in static air at 500°C for 5h to obtain the multimetallic supported compound 4.

**Example 2: Preparation of the multimetallic supported compound 5**

(a) A layered double hydroxide hydrotalcite type compound (SASOL PMG-20) was calcined under static air at 600°C for 3 hours to obtain a calcined mixed-oxide obtainable from the hydrotalcite-type having 20% of MgO and 80% of $Al_2O_3$.

(b) A dissolution formed by a mixture of 1.1 g of $Cu(NO_3)_2 \cdot 3H_2O$ and 0.5g of $Zn(NO_3)_2 \cdot 6H_2O$ in 5 mL of water millli-Q was dropwise added to a 4g of the mixed-oxide obtainable from the hydrotalcite-type obtained in step (a). Then, the impregnated compound was dried overnight at 100°C under static air. Finally, the dried compound was calcined under static air at 500°C for 5h.

(c) A dissolution formed by a mixture of 0.70 g of anhydrous $K_2CO_3$ in water milli-Q was dropwise added to 4 g of the calcined metal supported on the mixed-oxide derived from hydrotalcite-type obtained in step (b). Then, the impregnated compound was dried overnight at 100°C in the stove. Finally, the dried compound was calcined under static air at 500°C for 5h to obtain the multimetallic supported compound 5.

**Example 3: Preparation of the multimetallic supported compound 6**

(a) A layered double hydroxide type compound (SASOL PMG-20) was calcined under static air at 600°C for 3 hours to obtain a calcined mixed-oxide obtainable from the hydrotalcite-type, having 20% of MgO and 80% of $Al_2O_3$.

(b) A dissolution formed by a mixture of 0.045g of $Cu(NO_3)_2 \cdot 3H_2O$, 2.6g of $Fe(NO_3)_3 \cdot 9H_2O$, and 0.25g of $Cr(NO_3)_3 \cdot 9H_2O$ in 5 mL of water millli-Q was dropwise added to a 4g of the mixed-oxide obtainable from the hydrotalcite-type obtained in step (a). Then, the impregnated compound was dried overnight at 100°C in the stove. Finally, the dried compound was calcined under static air at 500°C for 5h.

(c) A dissolution formed by a mixture of 0.35g of anhydrous $K_2CO_3$ in water milli-Q was dropwise added to 4 g of the calcined metal supported on the mixed-oxide derived from hydrotalcite-type obtained in step (b). Then, the impregnated compound was dried overnight at 100°C in the stove. Finally, the dried compound was calcined under static air at 500°C for 5h to obtain the multimetallic supported compound 6.

**Example 4: Preparation process of compounds 1-3 and comparative compounds 1-2**

The multimetallic supported compounds 1-3 and comparative compounds 1-2 were prepared following the process defined in Example 1 using as a starting material the hydrotalcite-type compound as defined in the following Table:

| Hydrotalcite type compound | compound |
|---|---|
| SASOL PMG-5 | 1 |
| SASOL PMG-20 | 2 |
| SASOL PMG-30 | 3 |
| SASOL PMG-63 | Comp.1 |
| SASOL PMG-70 | Comp.2 |

## 2. ONE-POT PROCESS FOR CAPTURING AND REDUCING CARBON DIOXIDE

**Example 5: Process for capturing and reducing carbon dioxide using multimetallic supported compounds 1-6, and comparative compounds 1-2.**

Multimetallic supported compounds defined in Table 1, were shaped as tablets, then were chrused and sieved obtaining particle range between 200-300 $\mu$m, then were loaded to the lab fixed bed reactor.

Prior to the reaction the multimetallic supported compounds were activated.

- Rising the reactor temperature until 450 °C (10°C/min) over a 30 mln/min $N_2$ flow, once the temperature is reached:

    ◦ Compounds (1-5) and Comp. 1 and Comp. 2: Passing 40 mln/min of a $H_2$ diluted stream (10%v/v $H_2$/He) at 450°C during 1 h.
    ◦ Compound 6: Passing 40 mln/min of a 10 % v/v $H_2$ + 20 % v/v $CO_2$ diluted stream in Heat 450°C during 1 h.

A gas containing a diluted stream of $CO_2$, having an amount of $CO_2$ of 10% v/v, was passed over different multimetallic supported compounds as defined in Table 1 being the $CO_2$ selectively adsorbed in the multimetallic supported compound. Then, a hydrogen stream was added reducing the $CO_2$ adsorbed. Performance parameters were measured after 50 capture and reducing cycles.

The process was carried out alternating capture and reduction cycles. The reaction conditions of the capture step and reduction step are disclosed in Table 2:

**Table 2**

| Paremeter | Unity | value |
|---|---|---|
| **PROCESS CONDITIONS** | | |
| Catalyst mass | 9 | 0.6 |
| Pressure | Bar | 1 |
| Temperature | °C | 450 |
| **CAPTURE STEP** | | |
| Gas stream flow rate | mln min-1 | 50 |
| He stream flow rate | mln min-1 | 45 |
| $CO_2$ stream flow rate | mln min-1 | 5 |
| He | v/v % | 90 |
| $CO_2$ | v/v % | 10 |
| Time | s | 39 |
| WHSV | mln/g cat·h | 5.000 |
| **REDUCTION STEP** | | |
| $H_2$ flow rate | mln min-1 | 25 |

(continued)

| REDUCTION STEP | | |
|---|---|---|
| $H_2$ | v/v % | 100 |
| Time | s | 39 |
| WHSV | mln/g cat·h | 2.500 |

The efficient conversion of $CO_2$, selectivity to CO formation, selectivity to methane formation, and the overall process yield of CO are summarized in Table 3.

**Table 3**

| Performance parameters | Compound | | | | | | |
|---|---|---|---|---|---|---|---|
| | 1 | 2 | 3 | 5 | 6 | Comp. 1 | Comp.2 |
| Efficient $CO_2$ conversion | 44.6 | 43.8 | 39.6 | 43.0 | 42.9 | 32.7 | 29.8 |
| Selectivity to CO | 99.1 | 98.9 | 99.7 | 98.4 | 97.3 | 98.8 | 98.8 |
| Selectivity to $CH_4$ | 0.9 | 1.1 | 0.3 | 1.6 | 2.7 | 1.2 | 1.2 |
| Overall process yield to CO | 44.2 | 43.3 | 39.4 | 42.3 | 41.7 | 32.3 | 29.5 |

The results of Table 3 show that only the use of multimetallic supported compound of the present invention as a catalyst in a process for the capture and reduction of carbon dioxide allows converting carbon dioxide into carbon monoxide with a high selectivity to CO formation (higher than 97%) without compromising the efficient $CO_2$ conversion (about or higher than 40%) and the global yield to CO formation (about or higher than 40 %). In comparison, the use of the multimetallic supported compounds synthesized from calcined mixed-oxide obtained from hydrotalcite type compound having MgO content higher than 50 % by weight, although having a high selectivity to CO, do not maintain a high efficient $CO_2$ conversion (less than 33 %) and global yield to CO (less than 33%).

**Example 6: Process for capturing and reducing carbon dioxide using multimetallic supported compound 6.**

Multimetallic supported compound 6 defined in Table 1, was shaped as tablets, then was chrused and sieved obtaining particle range between 200-300 $\mu$m, then was loaded to the lab fixed bed reactor.
Prior to the reaction the multimetallic supported compound 6 was activated as follows:

- Rising the reactor temperature until 450 °C (10°C/min) over a 30 ml/min $N_2$ flow, once the temperature is reached:
- Alternating reduction clycles over a 45 mln/min $H_2$ flow and oxidation cycles over a 45 mln/min $N_2$ flow saturated in water at 450°C for 1 h.

A gas containing a diluted stream of $CO_2$, having an amount of $CO_2$ of 8 % v/v, was passed over compound 6 as defined in Table 1 being the $CO_2$ selectively adsorbed in the multimetallic supported compound. Then, a hydrogen stream was added reducing the $CO_2$ adsorbed.

Performance parameters were measured after **50 capture and reducing cycles.**

The process was carried out alternating capture and reduction cycles. The reaction conditions of the capture step and reduction step are disclosed in Table 4:

**Table 4**

| Paremeter | Unity | value |
|---|---|---|
| PROCESS CONDITIONS | | |
| Catalyst mass | g | 1 |
| Pressure | Bar | 1 |
| Temperature | °C | 500 |

(continued)

| CAPTURE STEP | | |
|---|---|---|
| Gas stream flow rate | mln min-1 | 26 |
| $N_2$ stream flow rate | mln min-1 | 24 |
| $CO_2$ stream flow rate | mln min-1 | 2 |
| $N_2$ | v/v % | 92 |
| $CO_2$ | v/v % | 8 |
| Time | s | 114 |
| WHSV | mln/ g cat·h | 1.572 |
| REDUCTION STEP | | |
| $H_2$ flow rate | mln min-1 | 84 |
| $H_2$ | v/v % | 100 |
| Time | s | 114 |
| WHSV | mln/ g cat·h | 5.040 |

The efficient conversion of $CO_2$, selectivity to CO formation, selectivity to methane formation, and the overall process yield of CO are summarized in Table 5.

**Table 5**

| Performance parameters | Compound 6 |
|---|---|
| Efficient $CO_2$ conversion | 70,9 |
| Selectivity to CO | 92,9 |
| Selectivity to $CH_4$ | 7,1 |
| Overall process yield to CO | 65,9 |

## 3. STABILITY TEST

### Example 7: Stability test using compound 6

Prior to the reaction the multimetallic supported compound 6 was activated following the same procedure as that indicated in Example 6.

A pure $CO_2$ stream was mixed with a water saturated $N_2$ stream obtaining a gas mixture having an amount of $CO_2$ of 10% v/v and then passed over multimetallic supported compound 6, being the $CO_2$ selectively adsorbed in the multimetallic supported compound, after system saturation the death volume was swept by a $N_2$ stream. Then, a hydrogen stream was added reducing the $CO_2$ adsorbed, prior to the beginning of the next capture step, death volume was swept by a $N_2$ stream.

Performance parameters were measured during 450 capture and reducing cycles, (75 h continuous operation). The process was carried out alternating capture and reduction cycles. The reaction conditions of the capture step and reduction step are disclosed in Table 6:

**Table 6**

| Paremeter | Unity | value |
|---|---|---|
| PROCESS CONDITIONS | | |
| Catalyst mass | g | 3 |
| Silicon Carbide | g | 3 |
| Pressure | Bar | 1 |

(continued)

| Paremeter | Unity | value |
|---|---|---|
| **PROCESS CONDITIONS** | | |
| Temperature | °C | 450 |
| **CAPTURE STEP** | | |
| Gas stream flow rate | mln min-1 | 87 |
| $N_2$ stream flow rate (dry basis) | mln min-1 | 78 |
| $CO_2$ stream flow rate | mln min-1 | 9 |
| $N_2$ | v/v % | 90 |
| $CO_2$ | v/v % | 10 |
| Time | s | 70 |
| WHSV | mln/ g cat·h | 1.724 |
| **INERTIZATION STEP** | | |
| Time | s | 245 |
| **REDUCTION STEP** | | |
| $H_2$ flow rate | mln min-1 | 89 |
| $H_2$ | v/v % | 100 |
| Time | s | 245 |
| WHSV | mln/ g cat·h | 1.774 |
| **INERTIZATION STEP** | | |
| Time | s | 70 |

The efficient conversion of $CO_2$, selectivity to CO formation, selectivity to methane formation, and the overall process yield of CO, at the start and at the end of the test are summarized in Table 7.

**Table 7**

| Performance parameters | Compound 6 | |
|---|---|---|
| | Start of run | End of run |
| Efficient $CO_2$ conversion | 59,8 | 60,7 |
| Selectivity to CO | 96,0 | 98,0 |
| Selectivity to $CH_4$ | 4,0 | 2,0 |
| Overall process yield to CO | 57,3 | 59,5 |

The results of Table 5 show that compound 6 has an excellent performance showing almost constant behaviour related to efficient $CO_2$ conversion that would confirm that the catalyst capture capability is continuously regenerated after reduction step, simultaneously maintaining the $CO_2$ adsorbed reduction capability.

On the other hand compound 6 shows a high CO selectivity that is increased reaching a plateau after 200 cycles (around 98 %) while $CH_4$ selectivity is decreased reaching a plateau after 200 cycles (around 2 %).

**Claims**

1. A multimetallic supported compound which comprises a multimetallic system supported on a calcined mixed-oxide obtainable from a layered double hydroxide hydrotalcite-type,
wherein:

the calcined mixed-oxide obtainable from a hydrotalcite-type comprises:

a $M^{2+}$ divalent metal cation M(II) selected from the group consisting of $Mg^{2+}$, $Zn^{2+}$, $Ni^{2+}$, $Co^{2+}$, and $Fe^{+2}$; and a $M^{3+}$ trivalent metal cation M(III) selected from the group consisting of $Al^{3+}$, $Fe^{3+}$, $Ga^{3+}$, $Co^{3+}$, $Mn^{3+}$, and $Cr^{3+}$;

the multimetallic system comprises:

an alkaline-metal cation selected from the group consisting of a $M^{1+}$ alkaline-metal cation M(I) which is $K^{1+}$; a $M^{2+}$ alkaline-earth metal cation M(II)' which is $Ba^{2+}$; and combination thereof;

a $M^{2+}$ divalent metal cation M(II)" which is $Cu^{2+}$;

optionally one or more of $M^{2+}$ divalent metal cations M(II)''' selected from the group consisting of $Zn^{2+}$, $Fe^{+2}$, $Pt^{2+}$, $Pd^{2+}$, $Mn^{2+}$, $Ni^{2+}$, $Co^{2+}$, $Au^{+2}$, and $Sn^{2+}$; and

optionally one or more of $M^{3+}$ trivalent metal cations M(III)' selected from the group consisting of $Fe^{3+}$, and $Cr^{3+}$;

the multimetallic supported compound is obtainable by a process comprising:

(a) calcinating a layered double hydroxide hydrotalcite-type comprising a mixture of M(II) cation, M(III) cation, and a n-valent anion selected from the group consisting of $NO_3^-$, $SO_4^-$, $CO_3^{2-}$, $CH_3CO_2^-$, $Cl^-$, $Br^-$, and $F^-$, at a temperature comprised from 300°C to 800°C for a period of time comprised from 2 to 10h to obtain the calcined mixed-oxide obtainable from a hydrotalcite-type having a weight ratio of $M(II)O:M(III)_2O_3$ comprised from 4:96 to 50:50;

(b) impregnating the calcined mixed-oxide obtainable from a hydrotalcite-type of step (a) with a metal precursor of the M(II)"$Cu^2$; followed by drying the paste thus obtained at a temperature comprised from 60 to 150°C; and calcinating the paste at a temperature comprised from 300 to 800°C for a period of time comprised from 2 to 10 hours to obtain a calcined metal supported on the mixed-oxide obtained from hydrotalcite-type; and

(c) impregnating the calcined metal supported on the mixed-oxide obtained from hydrotalcite-type of step (b) with the alkaline-metal precursor of the M(I) $K^{1+}$; or the M(II)' $Ba^{2+}$; or combination thereof; followed by drying the paste thus obtained at a temperature comprised from 60 to 150°C; and calcinating the paste at a temperature comprised from 300 to 800°C for a period of time comprised from 2 to 10 hours, obtaining the multimetallic supported compound;

wherein:

the multimetallic supported compound has an amount of M(I) comprised from 2 to 50% by weight of the weight of the calcined metal supported on the mixed-oxide obtained from hydrotalcite-type of step (b) or an amount of M(II)' comprised from 5 to 50% by weight of the calcined metal supported on the mixed-oxide obtained from hydrotalcite-type of step (b); or an amount of M(I) and M(II)' comprised from 2 to 50% by weight of the calcined metal supported on the mixed-oxide obtained from hydrotalcite-type of step (b); and the calcined mixed-oxide obtained from hydrotalcite-type has an amount of M(II) comprised from 4 to 50 % by weight of the weight of the calcined mixed-oxide obtained from hydrotalcite-type in form of M(II)O; with the proviso that:

wherein when the multimetallic system comprises a combination of a $M^{1+}$ alkaline-metal cation M(I) which is $K^{1+}$ and a $M^{2+}$ alkaline-earth metal cation M(II)' which is $Ba^{2+}$, then step (c) of the process comprises: impregnating the calcined metal supported on the mixed-oxide obtained from a hydrotalcite-type of step (b) with a mixture of the alkaline-metal precursor of M(I) $K^{1+}$ and an alkaline-earth metal precursor of M(II)' $Ba^{2+}$;

wherein when the multimetallic system comprises one or more of $M^{2+}$ divalent metal cations M(II)''', or one or more of $M^{3+}$ trivalent metal cations M(III)', then step (b) of the process comprises impregnating the calcined mixed-oxide obtainable from a hydrotalcite-type of step (a) with a mixture of the metal precursor of the M(II)"$Cu^{2+}$ and one or more of the precursors of the $M^{2+}$ divalent metal cation M(II)''' or one or more of the metal precursors of the $M^{3+}$ trivalent metal cation M(III)'; and

wherein when the multimetallic system comprises one or more of $M^{2+}$ divalent metal cations M(II)''' and one or more of $M^{3+}$ trivalent metal cations M(III)', then step (b) of the process comprises impregnating the calcined mixed-oxide obtainable from a hydrotalcite-type of step (a) with a mixture of the metal precursor of the M(II)"$Cu^{2+}$ and one or more of the precursors of the $M^{2+}$ divalent metal cation M(II)''' and one or more of the metal precursors of the $M^{3+}$ trivalent metal cation M(III)'.

2. The multimetallic supported compound according to claim 1, wherein the multimetallic system comprises the $M^{1+}$ alkaline-metal cation M(I) which is $K^{1+}$.

3. The multimetallic supported compound according to any of the claims 1-2, wherein in the layered double hydroxide hydrotalcite-type of step (a) M(II) is $Mg^{2+}$; and M(III) is $Al^{3+}$.

4. The multimetallic supported compound according to any of the claims 1-3, wherein the amount of M(II) which is in form of M(II)O is comprised from 4 to 35% by weight of the weight of the calcined mixed-oxide obtained from hydrotalcite-type.

5. The multimetallic supported compound according to any of the claims 1-4, wherein the $M^{2+}$ divalent metal cation M(II)''', and the $M^{3+}$trivalent metal cation M(III)' are absent

6. The multimetallic supported compound according to any of the claims 1-4, wherein the $M^{2+}$ divalent metal cation M(II)''' is $Zn^{2+}$, and the $M^{3+}$ trivalent metal cation M(III)' is absent.

7. The multimetallic supported compound according to claim 6, wherein an amount of $Zn^{2+}$ comprised from 20 to 40% by weight of the sum of the weights of the ZnO and CuO is in form of ZnO; and an amount of M(II)" $Cu^{2+}$ comprised from 60 to 80% by weight of the sum of the weights of the ZnO and CuO is in form of CuO.

8. The multimetallic supported compound according to any of the claims 1-4 wherein the $M^{3+}$trivalent metal cation M(III)' is a combination of $Fe^{3+}$ and $Cr^{3+}$, and the $M^{2+}$ divalent metal cation M(II)''' is absent.

9. The multimetallic supported compound according to claim 8, wherein an amount of $Fe^{3+}$ comprised from 75 to 95% by weight of the weight of the sum of the weights of $Fe_2O_3$, CuO, and $Cr_2O_3$ is in form of $Fe_2O_3$; an amount of M(II)" Cu comprised from 1 to 10% by weight of the weight of the sum of the weights of $Fe_2O_3$, CuO, and $Cr_2O_3$ is in form of CuO; and an amount of $Cr^{3+}$ comprised from 4 to 15% by weight of the weight of the sum of the weights of $Fe_2O_3$, CuO, and $Cr_2O_3$ is in form of $Cr_2O_3$.

10. The multimetallic supported compound according to any of the claims 1-9, wherein in the layered double hydroxide hydrotalcite-type of step (a) M(II) is $Mg^{2+}$; M(III) is $Al^{3+}$; and the n-valent anion is $CO_3^{2-}$ having the formula (I)

$$Mg_{2x}Al_2(OH)_{4x+4}CO_3nH_2O \qquad (I)$$

wherein x is from 0.05 to 1.2; and n is an integer of 1 to 6.

11. The multimetallic supported compound according to claim 10, wherein x is from 0.05 to 0.5.

12. A one-pot process for capturing and reducing carbon dioxide comprising:

(a) Contacting a multimetallic supported compound as defined in any of the claims 1-11 with a gas stream containing carbon dioxide to obtain the multimetallic supported compound having the carbon dioxide adsorbed; and
(b) Contacting the multimetallic supported compound obtained in step (a), with a reducing agent selected from the group consisting of $H_2$, an hydrogen source, and mixture thereof;

wherein:

the temperature of steps (a) and (b) is comprised from 300 to 750°C; and
the pressure of steps (a) and (b) is comprised from 1 to 80 bar.

13. The one-pot process for capturing and reducing carbon dioxide according to claim 12, further comprising capturing and reducing $NO_x$, $SO_x$, and mixture thereof, wherein $NO_x$ is selected from the group consisting of $N_2O$, NO, $NO_2$, $N_2O_4$, $N_2O_3$, and mixture thereof; and $SO_x$ is selected from the group consisting of $SO_2$, $SO_3$, and mixture thereof.

14. The process according to any of the claims 12-13, wherein the temperature of steps (a) and (b) is comprised from 350 to 550°C; and the pressure of steps (a) and (b) is comprised from 1 to 30 bar.

**15.** The process according to any of the claims 12-14, wherein the temperature of steps (a) and (b) is comprised from 400 to 550°C; and the pressure of steps (a) and (b) is comprised from 1 to 5 bar.

**16.** The process according to any of the claims 12-15, wherein the multimetallic supported compound is immobilized as a shaped solid.

Fig. 1

Fig.2

Fig.3

Europäisches
Patentamt
European
Patent Office
Office européen
des brevets

# EUROPEAN SEARCH REPORT

Application Number

EP 14 38 2387

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/101277 A1 (SCHIOEDT NIELS CHRISTIAN [DK]) 5 May 2011 (2011-05-05) * table 1 * | 1,2,5,6 | INV. B01J37/08 B01J20/08 B01J21/04 |
| X | US 2009/186952 A1 (STEYNBERG ANDRE PETER [ZA] ET AL) 23 July 2009 (2009-07-23) | 3,4,7-11 | B01J21/10 |
| Y | * paragraphs [0022], [0059], [0060] * | 12-16 | B01D53/86 B01J23/78 |
| X | US 2011/293509 A1 (COBDEN PAUL DEAN [NL] ET AL) 1 December 2011 (2011-12-01) | 3,4,7-11 | |
| Y | * paragraphs [0019], [0029], [0032], [0035], [0047], [0057] * | 12-16 | |
| X | US 2006/189481 A1 (SANCHEZ VALENTE JAIME [MX] ET AL) 24 August 2006 (2006-08-24) | 3,4,7-11 | |
| Y | * paragraphs [0048], [0060] - [0071] * * table 1 * | 12-16 | |
| A | US 5 140 049 A (FIATO ROCCO A [US] ET AL) 18 August 1992 (1992-08-18) * the whole document * | 1-16 | |
| A | US 2 692 274 A (HERBERT KOLBEL ET AL) 19 October 1954 (1954-10-19) * the whole document * | 1-16 | TECHNICAL FIELDS SEARCHED (IPC) B01J B01D |

The present search report has been drawn up for all claims

| Place of search | Date of completion of the search | Examiner |
|---|---|---|
| Munich | 20 March 2015 | Zieba, Roman |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 14 38 2387

20-03-2015

| Patent document cited in search report | | | Publication date | Patent family member(s) | | | Publication date |
|---|---|---|---|---|---|---|---|
| US 2011101277 | A1 | | 05-05-2011 | CN | 101618318 | A | 06-01-2010 |
| | | | | EP | 2141118 | A1 | 06-01-2010 |
| | | | | RU | 2009125333 | A | 10-01-2011 |
| | | | | UA | 102815 | C2 | 27-08-2013 |
| | | | | US | 2010000155 | A1 | 07-01-2010 |
| | | | | US | 2011101277 | A1 | 05-05-2011 |
| | | | | ZA | 200904643 | A | 26-05-2010 |
| US 2009186952 | A1 | | 23-07-2009 | AU | 2006257650 | A1 | 21-12-2006 |
| | | | | BR | PI0612237 | A2 | 24-04-2012 |
| | | | | CN | 101273112 | A | 24-09-2008 |
| | | | | GB | 2442646 | A | 09-04-2008 |
| | | | | JP | 5191888 | B2 | 08-05-2013 |
| | | | | JP | 2008546616 | A | 25-12-2008 |
| | | | | US | 2009186952 | A1 | 23-07-2009 |
| | | | | WO | 2006134471 | A2 | 21-12-2006 |
| | | | | ZA | 200710700 | A | 26-11-2008 |
| US 2011293509 | A1 | | 01-12-2011 | AU | 2011202375 | A1 | 09-06-2011 |
| | | | | CA | 2744416 | A1 | 27-05-2010 |
| | | | | CN | 102264633 | A | 30-11-2011 |
| | | | | EP | 2362848 | A1 | 07-09-2011 |
| | | | | US | 2011293509 | A1 | 01-12-2011 |
| | | | | WO | 2010059055 | A1 | 27-05-2010 |
| US 2006189481 | A1 | | 24-08-2006 | AU | 2003243054 | A1 | 21-01-2005 |
| | | | | CA | 2562014 | A1 | 13-01-2005 |
| | | | | US | 2006189481 | A1 | 24-08-2006 |
| | | | | US | 2011212009 | A1 | 01-09-2011 |
| | | | | WO | 2005003034 | A1 | 13-01-2005 |
| US 5140049 | A | | 18-08-1992 | NONE | | | |
| US 2692274 | A | | 19-10-1954 | NONE | | | |

For more details about this annex : see Official Journal of the European Patent Office, No. 12/82